# EUROPEAN PATENT APPLICATION

(11) **EP 4 817 999 A1**
(43) Date of publication of application: **07.10.2026**
(21) Application number: 26150635.6
(22) Date of filing: 07.01.2026
(51) Int. Cl.: B62D 7/15, B62D 15/02

(54) **VEHICLE LATERAL MOVEMENT CONTROL METHOD AND APPARATUS FOR DUAL-MOTOR VEHICLE, STORAGE MEDIUM, AND COMPUTER PROGRAM PRODUCT**

(30) Priority: 31.03.2025 CN 202510387403
(71) Applicant: SAIC MOTOR Corporation Limited, Shanghai 201203 (CN)
(72) Inventor: LU, Yong, Shanghai, 201203 (CN); ZHOU, Yuxing, Shanghai, 201203 (CN); ZHANG, Pengjun, Shanghai, 201203 (CN); MA, Chengjie, Shanghai, 201203 (CN); LI, Wen, Shanghai, 201203 (CN)
(74) Representative: Berggren Oy

(57) **Abstract**

Provided is a vehicle lateral movement control method and apparatus for a dual-motor vehicle, a storage medium, and a computer program product, and relates to the field of vehicles. The method includes: switching, in a case of receiving a vehicle lateral movement request, an operating mode of a wheel steering system of the dual-motor vehicle to a target mode; determining output motor torques of the dual-motor vehicle when a plurality of wheels of the dual-motor vehicle start to slip within a target area, and determining feedforward torques according to the output motor torques; determining PID closed-loop torques for the plurality of wheels respectively; and determining real-time required torques for a front-axle motor and a rear-axle motor during the vehicle lateral movement process, and controlling the front-axle motor, the rear-axle motor, and wheel brakes according to the real-time required torques to control the dual-motor vehicle to laterally move within the target area by means of drive-brake coordination control.

## Description

### Cross-Reference to Related Application

This application claims priority to Chinese Patent Application No. 202510387403.4 entitled "VEHICLE LATERAL MOVEMENT CONTROL METHOD AND APPARATUS FOR DUAL-MOTOR VEHICLE, STORAGE MEDIUM, AND COMPUTER PROGRAM PRODUCT", filed with the China National Intellectual Property Administration on March 31, 2025.

### Technical Field

The present application relates to the field of vehicle control, and specifically, to a vehicle lateral movement control method and apparatus for a dual-motor vehicle, a storage medium, and a computer program product.

### Background

With the acceleration of urbanization, parking spaces in densely populated areas have gradually become a scarce resource. This problem is particularly pronounced for emerging means of transportation like new energy vehicles, whose size and power characteristics differ from those of traditional vehicles, making parking difficulties even more significant. In many modern cities, parking environments are often constrained, with side parking spaces potentially being short in length and the safe distance left between vehicles in front and behind being potentially limited, posing challenges to the parking and exiting maneuvers of vehicles. When the traditional vehicles park in such environments, the traditional vehicles often require multi-time forward and backward movements or large-angle steering, which not only involves complex and time-consuming operations but also may pose potential risks to the vehicles and surroundings.

In scenarios involving parking in or exiting from the side parking spaces, a vehicle needs to complete lateral movement within an extremely limited space, which requires each wheel of the vehicle to independently and rapidly respond to different torque requirements, so as to achieve stable and precise sideways movements.

For the above-mentioned problems, most existing parking assistance technologies focus on environmental perception through sensors such as cameras and radar, and achieve parallel or perpendicular parking through automatic steering and braking. However, in scenarios involving sideways movements of the vehicle, especially in situations where space is extremely limited, these technologies are often hard to be effectively applied.

No effective solution has yet been proposed to solve the problem in the related art that the length of the side parking space is short or the safe distance left by the vehicles in front and behind is small, which makes it difficult for the vehicle to park into or exit from the parking space.

### Summary

Embodiments of the present application provide a vehicle lateral movement control method and apparatus for a dual-motor vehicle, a storage medium, and a computer program product, to at least solve the problems in the related art that, due to short side-parking space length or small safety distances left by vehicles in front and behind, it is difficult for the vehicle to park into or exit from a parking space.

According to one aspect of the embodiments of the present application, a vehicle lateral movement control method for a dual-motor vehicle is provided and applied to the dual-motor vehicle, including: switching, in a case of receiving a vehicle lateral movement request, an operating mode of a wheel steering system of the dual-motor vehicle to a target mode, wherein the vehicle lateral movement request is configured to instruct the dual-motor vehicle to laterally move within a target area, the dual-motor vehicle includes a front-axle motor and a rear-axle motor, and in the target mode, at least one front wheel and at least one rear wheel of the wheel steering system have a same rotation angle but opposite rotation directions; determining output motor torques of the dual-motor vehicle when a plurality of wheels of the dual-motor vehicle start to slip within the target area, and determining feedforward torques according to the output motor torques, wherein the output motor torques include an output motor torque of the front-axle motor and/or the rear-axle motor, and the feedforward torques are configured to predict required torques for the plurality of wheels of the dual-motor vehicle during a vehicle lateral movement process; determining PID (Proportional-Integral-Derivative) closed-loop torques for the plurality of wheels respectively according to real-time rotational speeds of the plurality of wheels during the vehicle lateral movement process, wherein the PID closed-loop torques are configured to provide torque compensation for the plurality of wheels to control a vehicle slip ratio of the dual-motor vehicle to be a target slip ratio during the vehicle lateral movement process; and determining real-time required torques for the front-axle motor and the rear-axle motor during the vehicle lateral movement process according to the feedforward torque and the PID closed-loop torques, and controlling the front-axle motor, the rear-axle motor, and a wheel brake according to the real-time required torques to control the dual-motor vehicle to laterally move within the target area, wherein a plurality of wheel brakes are configured to provide braking torques to the plurality of wheels, and the braking torques are configured to adjust actual driving torques of the plurality of wheels.

In an exemplary embodiment, the determining real-time required torques for the front-axle motor and the rear-axle motor during the vehicle lateral movement process according to the feedforward torque and the PID closed-loop torques includes: determining target required torques for the plurality of wheels respectively according to sums of the feedforward torque and the PID closed-loop torques for the plurality of wheels; and determining a maximum value among first required torques for a plurality of front wheels as a second required torque, and determining, according to the second required torque, a first real-time required torque for the front-axle motor; determining a minimum value among third required torques for a plurality of rear wheels as a fourth required torque, and determining, according to the fourth required torque, a second real-time required torque for the rear-axle motor, wherein the plurality of wheels include the plurality of front wheels and the plurality of rear wheels, and the target required torques include the first required torques and the third required torques, the third required torques are negative torques.

In an exemplary embodiment, the controlling the front-axle motor, the rear-axle motor, and a wheel brake according to the real-time required torques includes: controlling the front-axle motor according to the first real-time required torque and controlling the rear-axle motor according to the second real-time required torque; subtracting the plurality of first required torques from the second required torque respectively and taking absolute values of results obtained from the subtraction to obtain first required braking torques for the plurality of front wheels, and subtracting the plurality of third required torques from the fourth required torque respectively and taking absolute values of results obtained from the subtraction to obtain second required braking torques for the plurality of rear wheels; and providing braking torques to the plurality of front wheels through a wheel brake corresponding to the plurality of front wheels according to the plurality of first required braking torques, and providing braking torques to the plurality of rear wheels through a wheel brake corresponding to the plurality of rear wheels according to the plurality of second required braking torques, to control actual driving torques of the plurality of wheels to be the target required torques respectively.

In an exemplary embodiment, the determining output motor torques of the dual-motor vehicle when a plurality of wheels of the dual-motor vehicle start to slip within the target area, and determining feedforward torques according to the output motor torques includes: determining a current gravity G of the dual-motor vehicle, and determining the output motor torque according to the current gravity G and a following formula: ${T}_{Ft} = \frac{Gμr}{2 i}$, where *T_{Ft}* is the output motor torque, *µ* is an adhesion coefficient, *r* is a wheel radius, and *i* is a transmission ratio from a vehicle motor to a vehicle wheel end; and determining the feedforward torque using a following formula: ${T}_{FF} = \frac{1}{2} {T}_{Ft} - {T}_{Ofst}$, where *T_{FF}* is the feedforward torque, and *T_{Ofst}* is an offset torque between a maximum static friction force and a sliding friction force of the dual-motor vehicle.

In an exemplary embodiment, the determining PID closed-loop torques for the plurality of wheels respectively according to real-time rotational speeds of the plurality of wheels during the vehicle lateral movement process includes: calculating target rotational speeds for the plurality of wheels according to the target slip ratio; determining rotational speed differences between the real-time rotational speeds and the target rotational speeds; and determining the PID closed-loop torques using a following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$ *,* where *u*(*t*) is a PID closed-loop torque, *Kₚ* is a proportional gain coefficient, *e(t)* is a rotational speed difference, *Tᵢ* is an integral time coefficient, and *T_{d}* is a derivative time coefficient.

In an exemplary embodiment, after the switching, in a case of receiving a vehicle lateral movement request, an operating mode of a wheel steering system of the dual-motor vehicle to a target mode, the method further includes: sending steering prompt information to a target object to prompt the target object to control the front wheel and the rear wheel to steer at target rotation angles; and in a case of determining that the front wheel and the rear wheel steer at the target rotation angles, sending acceleration prompt information to the target object to prompt the target object to control an accelerator pedal, so as to control the front-axle motor to output a positive torque and the rear-axle motor to output a negative torque until the plurality of wheels of the dual-motor vehicle start to slip.

In an exemplary embodiment, the method further includes: receiving a target lateral movement distance sent by a target object, and in a case of determining that a lateral movement distance of the dual-motor vehicle reaches the target lateral movement distance during the vehicle lateral movement process, controlling the dual-motor vehicle to stop moving and controlling the wheel steering system to exit the target mode; or, in a case of receiving a vehicle braking request, controlling the dual-motor vehicle to stop moving and controlling the wheel steering system to exit the target mode.

According to another aspect of the embodiments of the present application, a vehicle lateral movement control apparatus for a dual-motor vehicle is further provided, and includes: a switching module, configured to switch, in a case of receiving a vehicle lateral movement request, an operating mode of a wheel steering system of the dual-motor vehicle to a target mode, wherein the vehicle lateral movement request is configured to instruct the dual-motor vehicle to laterally move within a target area, the dual-motor vehicle includes a front-axle motor and a rear-axle motor, and in the target mode, at least one front wheel and at least one rear wheel of the wheel steering system have a same rotation angle but opposite rotation directions; a first determination module, configured to determine output motor torques of the dual-motor vehicle when a plurality of wheel of the dual-motor vehicle start to slip within the target area, and determine feedforward torques according to the output motor torques, wherein the output motor torques include an output motor torque of the front-axle motor and/or the rear-axle motor, and the feedforward torques are configured to predict required torques for the plurality of wheels of the dual-motor vehicle during a vehicle lateral movement process; a second determination module, configured to determine PID closed-loop torques for the plurality of wheels respectively according to real-time rotational speeds of the plurality of wheels during the vehicle lateral movement process, wherein the PID closed-loop torques are configured to provide torque compensation for the plurality of wheels to control a vehicle slip ratio of the dual-motor vehicle to be a target slip ratio during the vehicle lateral movement process; and a control module, configured to determine real-time required torques for the front-axle motor and the rear-axle motor during the vehicle lateral movement process according to the feedforward torque and the PID closed-loop torques, and control the front-axle motor, the rear-axle motor, and a wheel brake according to the real-time required torques to control the dual-motor vehicle to laterally move within the target area, wherein a plurality of wheel brakes are configured to provide braking torques to the plurality of wheels, and the braking torques are configured to adjust actual driving torques of the plurality of wheels.

According to yet another aspect of the embodiments of the present application, a computer-readable storage medium is further provided, and a computer program is stored therein. The computer program is configured to perform, when executed, the above-mentioned vehicle lateral movement control method for a dual-motor vehicle.

According to still another aspect of the embodiments of the present application, an electronic apparatus is further provided, and includes a memory, a processor, and a computer program stored on the memory and executable on the processor. The above-mentioned processor performs the above-mentioned vehicle lateral movement control method for a dual-motor vehicle through the computer program.

According to still another aspect of the embodiments of the present application, a computer program product is further provided, and includes a computer program. The computer program, when executed by a processor, performs steps of the methods in various embodiments of the present application.

In the embodiments of the present application, after receiving the vehicle lateral movement request, the operating mode of the wheel steering system of the vehicle is switched to the target mode, where the vehicle lateral movement request is configured to instruct the dual-motor vehicle to laterally move within the target area, the dual-motor vehicle includes the front-axle motor and the rear-axle motor, and in the target mode, at least one front wheel and at least one rear wheel of the wheel steering system have a same rotation angle but opposite rotation directions. The output motor torques of the dual-motor vehicle are recorded when the wheels of the dual-motor vehicle start to slip within the target area, and the feedforward torques are determined according to the output motor torques, where the output motor torques are the output motor torque of the front-axle motor and/or the rear-axle motor, and the feedforward torque is configured to predict the required torques for a stable lateral movement of the plurality of wheels of the dual-motor vehicle during the vehicle lateral movement process. The real-time PID closed-loop torques for the plurality of wheels are determined respectively according to the real-time rotational speeds of the plurality of wheels during the vehicle lateral movement process, where the PID closed-loop torques are configured to provide torque compensation for the plurality of wheels to control the vehicle slip ratio of the dual-motor vehicle to remain stable at the target slip ratio during the vehicle lateral movement process, thereby ensuring the stable lateral movement of the vehicle. The real-time required torques for the front-axle motor and the rear-axle motor during the vehicle lateral movement process are determined according to the feedforward torque and the PID closed-loop torques, and the front-axle motor, the rear-axle motor, and a wheel brake are controlled according to the real-time required torques to control the dual-motor vehicle to perform the stable lateral movement within the target area, where a plurality of wheel brakes are configured to provide the braking torques to the plurality of wheels, and the braking torques are configured to adjust the actual driving torques of the wheels. By adopting the above-mentioned solution, through rear-wheel steering, feedforward torques of wheel ends, and PID torques derived from wheel-speed closed-loop control, along with coordination braking control, a closed-loop rotational speed control for each wheel end is achieved, thereby achieving the stable lateral movement of the dual-motor vehicle, and facilitating convenient side-parking and vehicle exiting, and thus solving the problem in the related art that it is difficult for the vehicle to park into or exit from the parking space due to short side-parking space lengths or small safety distances left by vehicles in front and behind.

### Brief Description of the Drawings

The accompanying drawings herein are incorporated into the specification to form a part of the specification, illustrate embodiments conforming to the present application, and are used to explain the principle of the present application together with the specification.

In order to more clearly describe the technical solutions in the embodiments of the present application or in the prior art, the accompanying drawings used for describing the embodiments or the prior art will be briefly described below. Apparently, those of ordinary skill in the art may still derive other accompanying drawings based on these accompanying drawings without paying creative efforts.
FIG. 1 is a flowchart of an optional vehicle lateral movement control method for a dual-motor vehicle according to an embodiment of the present application;
FIG. 2 is a schematic diagram of force analysis during an optional vehicle lateral movement process according to an embodiment of the present application;
FIG. 3 is a schematic diagram of a drive-brake coordination control process during an optional vehicle lateral movement process according to an embodiment of the present application; and
FIG. 4 is a structural block diagram of an optional vehicle lateral movement control apparatus for a dual-motor vehicle according to an embodiment of the present application.

### Detailed Description of the Embodiments

In order to make those skilled in the art better understand solutions of the present application, the technical solutions in the embodiments of the present application will be clearly and completely described below in conjunction with the accompanying drawings in the embodiments of the present application, and it is apparent that the described embodiments are merely a part rather all the embodiments of the present application. Based on the embodiments of the present application, all other embodiments obtained by those of ordinary skill in the art without paying creative labor shall fall within the protection scope of the present application.

It should be noted that the terms such as "first" and "second" of the specification and claims of the present application and the above-mentioned accompanying drawings are used to distinguish similar objects but are not necessarily intended to describe specific sequences or precedence orders. It should be understood that such used data is interchangeable where appropriate, such that the embodiments of the present application described herein may be implemented in orders other than those illustrated or described herein. In addition, the terms "include/comprise", "have", and any variations thereof are intended to encompass non-exclusive inclusions. For example, a process, a method, a system, a product, or a device including a series of steps or units is not necessarily limited to those explicitly-listed steps or units, but may include other steps or units that are not explicitly listed or inherent to the process, the method, the system, the product, or the device.

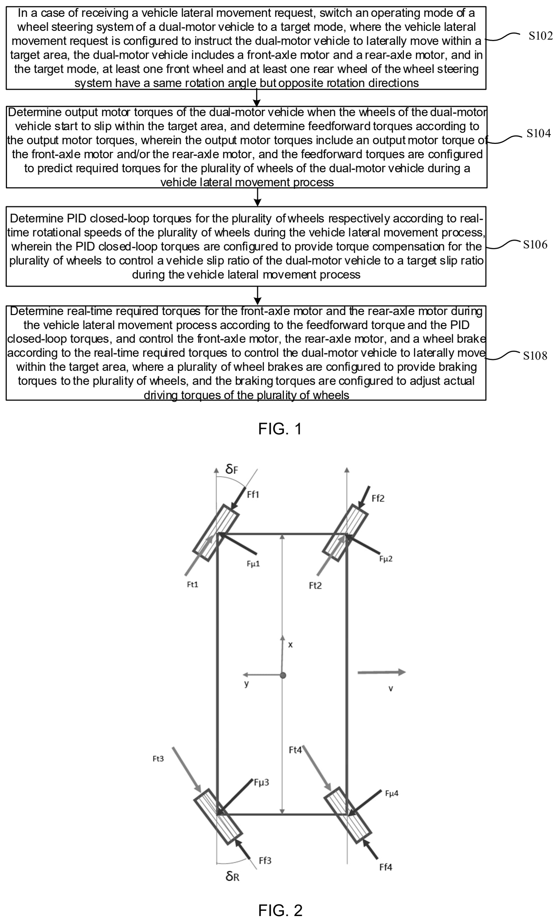

To solve the technical problems existing in the related art, this embodiment provides a vehicle lateral movement control method for a dual-motor vehicle, applicable to a dual-motor vehicle. FIG. 1 is a flowchart of an optional vehicle lateral movement control method for a dual-motor vehicle according to an embodiment of the present application. The process includes the following steps S102 to S108.

Step S102: In a case of receiving a vehicle lateral movement request, switch an operating mode of a wheel steering system of the dual-motor vehicle to a target mode, where the vehicle lateral movement request is configured to instruct the dual-motor vehicle to laterally move within a target area, the dual-motor vehicle includes a front-axle motor and a rear-axle motor, and in the target mode, at least one front wheel and at least one rear wheel of the wheel steering system have a same rotation angle but opposite rotation directions.

Step S104: Determine output motor torques of the dual-motor vehicle when the wheels of the dual-motor vehicle start to slip within the target area, and determine feedforward torques according to the output motor torques, where an output motor torque is an absolute value of the output motor torque of the front-axle motor and/or the rear-axle motor, and the feedforward torques are configured to predict required torques for the plurality of wheels of the dual-motor vehicle during the vehicle lateral movement process.

Step S106: Determine PID closed-loop torques for the plurality of wheels according to real-time rotational speeds of the plurality of wheels during the vehicle lateral movement process, where the PID closed-loop torques are configured to provide torque compensation for the plurality of wheels, so as to control a vehicle slip ratio of the dual-motor vehicle to be a target slip ratio during the vehicle lateral movement process.

Step S108: Determine real-time required torques for the front-axle motor and the rear-axle motor during the vehicle lateral movement process according to the feedforward torque and the PID closed-loop torques, and control the front-axle motor, the rear-axle motor, and wheel brakes according to the real-time required torques to control the dual-motor vehicle to laterally move within the target area, where the wheel brakes are configured to provide braking torques to the plurality of wheels, and the braking torques are configured to adjust actual driving torques of the plurality of wheels.

Through the above-mentioned steps, after the vehicle lateral movement request is received, the operating mode of the wheel steering system of the vehicle is switched to the target mode, where the vehicle lateral movement request is configured to instruct the dual-motor vehicle to laterally move within the target area. The dual-motor vehicle includes the front-axle motor and the rear-axle motor, and in the target mode, the front wheels and the rear wheels of the wheel steering system have a same rotation angle but opposite rotation directions. The output motor torques of the dual-motor vehicle are recorded when the wheels of the dual-motor vehicle start to slip within the target area, and the feedforward torques are determined according to the output motor torques, where the output motor torques are the output motor torque of the front-axle motor and/or the rear-axle motor, and the feedforward torques are configured to predict the required torques for a stable lateral movement of the plurality of wheels of the dual-motor vehicle during the vehicle lateral movement process. The real-time PID closed-loop torques of the plurality of wheels are determined respectively according to the real-time rotational speeds of the plurality of wheels during the vehicle lateral movement process, where the PID closed-loop torques are configured to provide torque compensation for the plurality of wheels, so as to control the vehicle slip ratio of the dual-motor vehicle to remain stable at the target slip ratio during the vehicle lateral movement process, thereby ensuring the stable lateral movement of the vehicle. The real-time required torques for the front-axle motor and the rear-axle motor during the vehicle lateral movement process are determined according to the feedforward torque and the PID closed-loop torques, and the front-axle motor, the rear-axle motor, and the wheel brakes are controlled according to the real-time required torques to control the dual-motor vehicle to perform the stable lateral movement within the target area, where the wheel brakes are configured to provide the braking torques to the plurality of wheels, and the braking torques are configured to adjust the actual driving torques of the wheels. By adopting the above-mentioned solution, through rear-wheel steering, feedforward torques at each wheel end, and PID torques derived from wheel-speed closed-loop control, along with coordination braking control, a closed-loop rotational speed control for each wheel end is achieved, thereby achieving the stable lateral movement of the dual-motor vehicle, and facilitating convenient side-parking and vehicle exiting, and thus solving the problem encountered in the related art that it is difficult for the vehicle to park into or exit from the parking space due to short side-parking space length or small safety distances left by vehicles in front and behind.

In an exemplary embodiment, the step of determining real-time required torques for the front-axle motor and the rear-axle motor during the vehicle lateral movement process according to the feedforward torque and the PID closed-loop torques includes: determining target required torques for the plurality of wheels respectively according to sums of the feedforward torque and the PID closed-loop torques for the plurality of wheels; and determining a maximum value among first required torques for the plurality of front wheels as a second required torque, determining, according to the second required torque, a first real-time required torque for the front-axle motor, determining a minimum value among third required torques for the plurality of rear wheels as a fourth required torque, and determining, according to the fourth required torque, a second real-time required torque for the rear-axle motor, where the plurality of wheels include the plurality of front wheels and the plurality of rear wheels, and the target required torques include the first required torque and the third required torque, the third required torque is a negative torque.

Optionally, the step of controlling the front-axle motor, the rear-axle motor, and wheel brakes according to the real-time required torques includes: controlling the front-axle motor according to the first real-time required torque and controlling the rear-axle motor according to the second real-time required torque; subtracting each of the plurality of first required torques from the second required torque respectively and taking absolute values of results obtained from the subtraction to obtain first required braking torques for the plurality of front wheels, and subtracting each of the plurality of third required torques from the fourth required torque respectively and taking absolute values of results obtained from the subtraction to obtain second required braking torques for the plurality of rear wheels; providing braking torques to the plurality of front wheels through a wheel brake corresponding to the plurality of front wheels according to the plurality of first required braking torques, and providing braking torques to the plurality of rear wheels through a wheel brake corresponding to the plurality of rear wheels according to the plurality of second required braking torques, to control actual driving torques of the plurality of wheels to be the plurality of target required torques respectively.

In the lateral movement control method for a dual-motor vehicle, the key to achieving the stable lateral movement lies in precisely controlling the rotational speed of each wheel to adapt to complex road surface conditions and power requirements during the vehicle sideways movement process. This embodiment provides a detailed introduction on how to determine the real-time required torques for the front-axle motor and the rear-axle motor of the vehicle during the lateral movement process in combination with the feedforward torque and the PID closed-loop torques, thereby achieving independent closed-loop control of the wheel rotational speeds and ensuring the stable lateral movement of the vehicle in narrow spaces.

Steps are described as below:
1. Comprehensive calculation of feedforward torque and PID closed-loop torque: before the vehicle begins to laterally move, the system first calculates the feedforward torque based on a vehicle state (e.g., an accelerator pedal position, and a target slip ratio), so as to estimate an external resistance that may be encountered and power requirements during the vehicle lateral movement process. Meanwhile, a PID control algorithm is configured to calculate the PID closed-loop torque according to a deviation between an actual rotational speed and a target rotational speed of each wheel, to instantaneously correct the rotational speed of the wheel and ensure that the rotational speed of the wheel is consistent with a target value.
2. Determination of target required torque for each wheel: the feedforward torque is added to the PID closed-loop torque of each wheel to obtain the target required torque for the wheel during the lateral movement process. This step forms a basis for independent closed-loop control of each wheel, ensuring that each wheel can obtain the most appropriate torque distribution according to a specific working environment and requirements, thereby reducing slippage and control delay, and enhancing the stability and responsiveness of the lateral movement.
3. Calculation of real-time required torques for the front-axle motor and the rear-axle motor: after determining the target required torques for all the wheels, for the front axle, the system selects a maximum value among the target required torques of the front two wheels (a left front wheel and a right front wheel) as the second required torque. The maximum value represents a maximum resistance that the front axle needs to overcome or a maximum speed requirement that the front axle needs to achieve during the lateral movement process. By multiplying the second required torque by 2 (considering that the front-axle motor needs to simultaneously meet the maximum requirements of the two front wheels), the first real-time required torque for the front-axle motor is obtained. For a rear axle, the system selects a minimum value among the target required torques for the rear two wheels (a left rear wheel and a right rear wheel) as the fourth required torque. This is because, as the rear-axle motor is laterally moving, a braking torque (typically represented as the negative torque) may need to be applied on certain wheels to control a vehicle speed or direction. By multiplying the fourth required torque (the negative torque with the largest absolute value) by 2, the second real-time required torque for the rear-axle motor is obtained, thereby ensuring that the rear axle may provide sufficient braking or control force to meet the minimum requirements during the vehicle lateral movement.

It should be noted that, for the rear-axle motor torque (i.e., the fourth required torque), it needs to select a smaller required torque among the two rear wheels because an output torque of the rear axle is a negative torque, meaning the numerically smaller value of the wheel actually has a greater absolute value.

For both the front axle and the rear axle, the greater absolute value of torques corresponding to the front wheel and the rear wheel is multiplied by 2, because each of the front axle and the rear axle has only one motor, which needs to simultaneously meet the torque requirements of the corresponding axle. After outputting a large torque, the large torque is distributed evenly by a differential, ensuring that the torque requirements at the wheel end with large-torque requirements are met, while for the other wheel with small-torque requirements, the final wheel end torque may be controlled to a target value by outputting braking force.

4. Coordination control of brakes: while the front-axle motor and the rear-axle motor provide corresponding torques, for situations where the required torque for the wheel is small (with a small absolute value, particularly possibly represented as a small negative torque on the rear axle), the system provides an additional braking torque through the brake of the wheel to compensate for a difference between the motor output and the actual wheel requirements, thereby ensuring that each wheel may accurately follow the target required torque and achieve the stable vehicle lateral movement.

Through this series of calculation and control strategies in this embodiment, the dual-motor vehicle may flexibly adapt to various external conditions during the lateral movement process, thereby achieving independent rotational speed closed-loop control for the four wheels, then further ensuring the stable lateral movement of the vehicle in narrow spaces, and improving the efficiency and safety of parking and exiting. The drive-brake coordination control method not only overcomes the technical bottlenecks of the dual-motor vehicle in lateral movement operations, but also provides new possibilities for the application of new energy vehicles in complex parking environments.

Further, the step of determining output motor torques of the dual-motor vehicle when the wheels of the dual-motor vehicle start to slip within the target area, and determining feedforward torques according to the output motor torques includes: determining a current gravitational force G of the dual-motor vehicle, and determining the output motor torque according to the current gravitational force G and the following formula: ${T}_{Ft} = \frac{Gμr}{2 i}$where *T_{Ft}* is the output motor torque, *µ* is an adhesion coefficient, r is a wheel radius, and *i* is a transmission ratio from the vehicle motor to the vehicle wheel end; and determining the feedforward torque using the following formula: ${T}_{FF} = \frac{1}{2} {T}_{Ft} - {T}_{Ofst}$, where *T_{FF}* is the feedforward torque, and *T_{Ofst}* is an offset torque between a maximum static friction force and a sliding friction force of the dual-motor vehicle.

In a lateral movement control method for a new energy vehicle driven by dual motors, accurately calculating and controlling the output motor torque is crucial for achieving the stable vehicle lateral movement. When the vehicle begins to laterally move within the target area, the wheels may encounter different ground conditions, leading to the phenomenon of slippage. The wheel slippage may not only reduce vehicle handling and safety but also may affect the efficiency and stability of the lateral movement. Therefore, determining the output motor torque when the wheels of the vehicle start to slip and calculating the feedforward torque accordingly are of utmost importance for optimizing a lateral movement control strategy.

### 1. Determination of output motor torque

During the vehicle lateral movement process, when the wheels start to slip, the current gravitational force (G) of the vehicle needs to be first determined, which is typically calculated based on a product of a total mass of the vehicle and a gravitational acceleration. Next, the output motor torque *T_{Ft}* when the wheels start to slip is calculated according to a friction force between the wheels and the ground, as well as transmission characteristics of the vehicle. A formula for calculating the torque is: , ${T}_{Ft} = \frac{Gμr}{2 i}$ where *µ* is the adhesion coefficient between the wheel and the ground, representing a ratio of a maximum lateral force that the wheels can withstand on the ground to a vertical load; *r* is the radius of the wheel, which affects a pressure distribution of a wheel-ground contact area; and *i* is the transmission ratio from the vehicle motor to the vehicle wheel end, reflecting an amplification or reduction ratio of the motor output torque when transmitted to the wheel end through a transmission system.

The calculated *T_{Ft}* represents a maximum motor output torque that ensures the wheel does not slip when the vehicle starts to laterally move. This information is crucial for subsequent calculation of the feedforward torque and closed-loop control of the rotational speeds of the four wheels.

### 2. Determination of feedforward torque

The feedforward torque *T_{FF}* is determined based on the output motor torque *T_{Ft}* and is configured to pre-allocate the torque at a beginning stage of the lateral movement, and reduce the risk of wheel slippage caused by dynamic response time. A formula for calculating the feedforward torque is:
${T}_{FF} = \frac{1}{2} {T}_{Ft} - {T}_{Ofst}$, where *T_{Ofst}* is the offset torque between the maximum static friction force and the sliding friction force of the dual-motor vehicle. Since there is a difference value between the maximum static friction force of the vehicle and the sliding friction force after slipping (the offset is defined according to the difference value), subtracting the difference value from the maximum static friction force yields the sliding friction force, and the feedforward term is determined according to the sliding friction force. During PID control, easier convergence to a target is facilitated under the same parameters, allowing the vehicle to respond more quickly and flexibly to different lateral movement requirements and road conditions.

By calculating the feedforward torque *T_{FF},* an initial torque allocation benchmark may be provided for the lateral movement control strategy, thereby ensuring that each wheel may obtain the sufficient torque to overcome the ground friction force at the beginning of the vehicle lateral movement while avoiding wheel slippage caused by the excessive torque. The torque benchmark, combined with the PID closed-loop torque, jointly determines the actual required torque for each wheel during the vehicle lateral movement process, thereby achieving the stable lateral movement.

In summary, in the lateral movement control of the dual-motor vehicle, determining the output motor torque *T_{Ft}* and the feedforward torque *T_{FF}* provides a crucial torque allocation strategy for achieving the stable vehicle lateral movement. By considering parameters such as the gravity, the adhesion coefficient, the wheel radius, and the transmission ratio of the vehicle, the motor torque requirements when the wheel begins to slip may be estimated, and meanwhile, a reasonable torque pre-allocation may be provided to the wheels at the beginning of the lateral movement, thereby ensuring that the vehicle may effectively cope with complex road conditions, achieve precise sideways movement, and improve the efficiency and safety of parking and exiting.

Optionally, the step of determining PID closed-loop torques of the plurality of wheels respectively according to real-time rotational speeds of the plurality of wheels during the vehicle lateral movement process includes: calculating target rotational speeds of the plurality of wheels according to the target slip ratio; determining a rotational speed difference between the real-time rotational speed and the target rotational speed; and determining the PID closed-loop torque using the following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$ , where *u*(*t*) is the PID closed-loop torque, *Kₚ* is a proportional gain coefficient, *e(t)* is the rotational speed difference, *Tᵢ* is an integral time coefficient, and *T_{d}* is a derivative time coefficient.

In a lateral movement control strategy for a new energy vehicle driven by dual motors, achieving independent and precise rotational speed control for each of the four wheels is the key to ensuring the stable vehicle lateral movement. The dynamic calculation of the proportional-integral-derivative (PID) term closed-loop torque may adjust the torque output of the wheels in real time, thereby allowing the rotational speed of the wheels to closely track the target rotational speed. Even in a complex lateral movement process, wheel slippage may be avoided, and meanwhile vehicle handling and safety may be ensured.

The following are specific steps and explanations for determining the PID closed-loop torque:
1. Calculation of target slip ratio and target rotational speed: first, based on a driving intention and a current state of the vehicle, the system determines a target slip ratio. The target slip ratio reflects desired lateral movement characteristics during the vehicle lateral movement process and is a core parameter for vehicle lateral movement control. Next, the system calculates the target rotational speed of each wheel during the lateral movement process using the target slip ratio and actual driving parameters of the vehicle (e.g., a current vehicle speed and a lateral movement direction). The setting of the target rotational speed ensures that the vehicle may laterally move along a preset path and speed, and also provides a basis for the subsequent calculation of the PID closed-loop torque. A relationship between the slip ratio and the wheel speed is: $s = \frac{Vwheel - V vehicle}{Vwheel}$, where "s" is the slip ratio.
2. Determination of real-time rotational speed and rotational speed difference: during the vehicle lateral movement process, the actual rotational speed (real-time rotational speed) of each wheel is monitored in real time through a wheel speed sensor. By comparing the real-time rotational speed of each wheel with the previously calculated target rotational speed, the rotational speed difference *e(t)* may be determined. The rotational speed difference reflects a deviation between the rotational speed of the wheel and the target state, and is a direct basis for the PID control algorithm to adjust the torque output.
3. Calculation of PID closed-loop torque: based on the rotational speed difference e(t), the system uses the PID control algorithm to calculate the PID closed-loop torque *µ(t)* for each wheel. A formula for calculating the PID closed-loop torque is as follows: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$*,* where *Kₚ , Tᵢ ,* and *T_{d}* represent the proportional gain coefficient, the integral time coefficient, and the derivative time coefficient, respectively. The adjustment of these parameters is crucial for the performance of the PID control. The parameters respectively control an immediate response to the deviation, a cumulative response to persistent deviations, and a predictive response to a rate of change of the deviation, which jointly determine a control strategy of the system for the rotational speed difference.

Proportional term *Kₚe*(*t*): this term provides an immediate response to a current rotational speed difference, and a magnitude of the coefficient *Kₚ* determines a strength of the response. A relatively great *Kₚ* may allow the system to quickly correct the deviation, but may lead to oscillation of the control system.

Integral term $\frac{1}{{T}_{i}} {\int }_{0}^{t} e \left(t\right) dt$: the integral term is responsible for accumulating the deviation to ensure the elimination of deviations over a long period of time. By adjusting the integral time coefficient *Tᵢ*, static errors in the system may be avoided. However, an excessive integral effect may cause system overshoot or response lag.

Derivative term ${T}_{d} \frac{de \left(t\right)}{dt}$: the derivative term predicts a rate of change of the rotational speed difference, helping the system to make adjustments in advance and reduce overshoot and oscillation. The proper selection of the derivative time coefficient *T_{d}* may improve the response speed and stability of the system.

4. Torque adjustment and allocation: the calculated PID closed-loop torque *u(t)* is configured to adjust the motor output torque of each wheel. For the dual-motor vehicle with independent control of the four wheels, the torque adjustment strategy allows each wheel to obtain the most suitable torque calculated according to actual requirements and a deviation state during the sideways movement of the vehicle. In this way, even in narrow parking spaces or complex road conditions, the vehicle may maintain the stable lateral movement, prevent wheel slippage, and improve the efficiency and safety of parking and exiting.

Through this series of calculation and control steps in this embodiment, the dual-motor vehicle may achieve real-time monitoring and precise control of the wheel rotational speeds, ensuring that each wheel may obtain the optimal torque allocation during the lateral movement process, thus achieving the stable and controllable sideways movement of the vehicle. A dynamic adjustment mechanism of the PID closed-loop torque provides strong adaptability and robustness for vehicle lateral movement control, and is an important technical means for achieving intelligent parking and exiting functions of the new energy vehicle.

In an exemplary embodiment, after the step of switching, in a case of receiving a vehicle lateral movement request, an operating mode of a wheel steering system of the dual-motor vehicle to a target mode, the method further includes: sending steering prompt information to a target object to prompt the target object to control the front wheels and the rear wheels to turn to target rotation angles; and in a case of determining that the front wheels and the rear wheels turn to the target rotation angles, sending acceleration prompt information to the target object to prompt the target object to control an accelerator pedal, so as to control the front-axle motor to output a positive torque and the rear-axle motor to output a negative torque until wheels of the dual-motor vehicle start to slip.

In the lateral movement control method for the new energy vehicle driven by dual motors, the interaction between a driver and the vehicle is the key to achieving the efficient and safe lateral movement. In this embodiment, the driver is guided on how to operate the steering system and the accelerator pedal through systematic logical control, so as to ensure that the vehicle may laterally move along a preset trajectory and speed while preventing wheel slippage and ensuring stability and safety of the vehicle.

The following are detailed steps of a guiding logic described in this embodiment:
1. Recognizing vehicle lateral movement request: when the driver issues a lateral movement request through a user interface (e.g., a large screen) in the vehicle, the vehicle control system responds immediately. The system first recognizes the lateral movement request and confirms that a current environment and state of the vehicle are suitable for the lateral movement operation. This includes checking whether a rear-wheel steering system, a braking system, and a power system of the vehicle operate normally, as well as assessing whether a current road condition allows for the vehicle lateral movement.
2. Switching an operating mode of the wheel steering system: after confirming that lateral movement conditions are met, the vehicle control system switches the operating mode of the wheel steering system to the target mode, that is, a lateral movement mode. In the lateral movement mode, the steering control of the front wheels and the rear wheels follows a preset logic to ensure that absolute values of rotation angles of the front wheels and the rear wheels are equal but the rotation angles have opposite directions. If the front wheels turn to the left, the rear wheels turn to the right. This steering mode is beneficial for the vehicle to move smoothly in a y-axis direction and is very suitable for side-parking or exiting operations in narrow spaces.
3. Sending steering prompt information to the driver: the system sends the steering prompt information to the driver through a vehicle interface (e.g., a dashboard or a central control screen), clearly indicating how the driver should control a steering control to make the front wheels and the rear wheels of the vehicle turn to the target rotation angles. The sending of the prompt information ensures that the driver may accurately perform the steering operation, laying a foundation for the subsequent lateral movement preparation.
4. Wheel steering confirmation and sending acceleration prompt information: once the system detects that the front wheels and the rear wheels have turned to the target rotation angles, the system sends the acceleration prompt information to the driver. The prompt information guides the driver to gradually press the accelerator pedal and start the lateral movement operation. Under the control of the accelerator pedal, the front-axle motor outputs the positive torque to propel the vehicle forward; and the rear-axle motor outputs the negative torque, which is transmitted to the two rear wheels through a reducer and the differential, generating a backward force and thus forming a lateral movement force in the y-axis direction of the vehicle.
5. Wheel slippage monitoring and control strategy adjustment: during the vehicle lateral movement process, the system monitors the rotational speed of each wheel and a situation of contact with the ground in real time to prevent wheel slippage. When detecting that the wheel is about to or starts to slip, the system automatically adjusts a current control strategy, including adjusting the output torques of the front-axle motor and the rear-axle motor, and may also activate a braking coordination control system to make the wheel-end torque of the braked wheels meet the required torque, ensuring the stability and safety of the vehicle during the lateral movement process.

Through the above-mentioned steps, the new energy vehicle driven by the dual motors may achieve the efficient and stable lateral movement operation with the cooperation of the driver through precise steering control and torque allocation. The interaction logic in this embodiment not only simplifies an operation process of the driver and improves the execution efficiency of the lateral movement, but also ensures driving safety in complex environments, and is an important technical solution for enhancing the flexibility of the new energy vehicle in side parking and exiting.

Based on the above-mentioned steps, the method further includes: receiving a target lateral movement distance sent by the target object, and in a case of determining that a lateral movement distance of the dual-motor vehicle reaches the target lateral movement distance during the vehicle lateral movement process, controlling the dual-motor vehicle to stop moving and controlling the wheel steering system to exit the target mode; or, in a case of receiving a vehicle braking request, controlling the dual-motor vehicle to stop moving and controlling the wheel steering system to exit the target mode.

In the lateral movement control method for the new energy vehicle driven by dual motors, it is ensured that the vehicle may accurately and safely complete the lateral movement operation according to instructions of the driver or the system, which is one of core objectives of the entire control process. This embodiment provides a detailed description of how to receive the target lateral movement distance during the lateral movement process and safely stop the vehicle movement and exit the lateral movement mode when a specified distance is reached or the braking request is received.

The following are key steps and functions thereof in this embodiment:
1. Receiving the target lateral movement distance: the driver may set a target lateral movement distance through an interaction interface of the vehicle (e.g., a touch screen or a voice instruction system), and the distance reflects specific requirements of the driver for a final lateral movement position of the vehicle. The control system receives and stores this target value as a stopping criterion for the subsequent lateral movement process.
2. Monitoring and comparing lateral movement distance: during the vehicle lateral movement process, the system monitors the lateral movement distance of the vehicle in real time, collects data through sensors (e.g., a wheel speed sensor, an accelerometer, or a global positioning system (GPS)), and calculates an actual lateral movement distance of the vehicle. This monitoring function ensures that the system may keep track of a movement state of the vehicle at any time, providing data support for the precise control of the lateral movement distance.
3. Controlling when the target lateral movement distance is reached: when the actual lateral movement distance of the vehicle reaches the target lateral movement distance set by the driver, the control system responds immediately and performs the following operations:
4. Controlling the vehicle to stop moving: by adjusting the torque outputs of the front-axle motor and the rear-axle motor and potentially activating the braking system, ensuring that the vehicle may decelerate smoothly and eventually stop.
5. Controlling the wheel steering system to exit the target mode: the system switches the operating mode of the wheel steering system from the lateral movement mode back to a regular driving mode, restoring a normal steering control logic of the vehicle, and preparing for subsequent driving or parking operations.
6. Controlling when receiving the vehicle braking request: in addition to reaching the target lateral movement distance, the system should also be able to respond promptly to emergencies or driver's operations. When the vehicle braking request (e.g., the driver pressing a brake pedal) is received, the system immediately performs the operation of stopping the vehicle movement and synchronously exits the target mode of the wheel steering system, thereby ensuring that in an emergency or when the driver intervenes actively, the vehicle may respond quickly, stop the lateral movement operation, and safeguard the driver and the vehicle.

The control logic in this embodiment not only reflects the advanced nature in the aspect of intelligent lateral movement control for the new energy vehicle driven by the dual motors, but also takes into account the safety and controllability during the actual driving process, ensuring the operational flexibility and responsiveness in complex environments. By accurately receiving and processing the target lateral movement distance and the braking request, the vehicle control system may achieve precise control and timely termination of the lateral movement operation, thereby enhancing the safety and convenience of the new energy vehicle when parking and exiting in narrow spaces.

In an optional embodiment, the principle of the above-mentioned vehicle lateral movement process will be introduced below in the present application with reference to FIG. 2. As shown in FIG. 2, which provides a theoretical analysis of forces acting on the vehicle during the stable lateral movement process. The rotation angles of the front wheels and the rear wheels are δ_{F} and δ_{R} respectively, and are in opposite directions (e.g., the front wheels turn to the right while the rear wheels turn to the left) and are of equal magnitude. The vehicle moves in a negative y direction. The driving force, sliding friction force, and rolling resistance acting on each wheel are shown in FIG. 2. The forces in the y direction are analyzed, and satisfy the following formulas: $ΣFy = 0 ;$ (0) ${F}_{t 1} sin {δ}_{F} - {F}_{f 1} sin {δ}_{F} - {F}_{μ 1} cos {δ}_{F} = 0 ;$ (1) ${F}_{t 2} sin {δ}_{F} - {F}_{f 2} sin {δ}_{F} - {F}_{μ 2} cos {δ}_{F} = 0 ;$ (2) ${F}_{t 3} sin {δ}_{R} - {F}_{f 3} sin {δ}_{R} - {F}_{μ 3} cos {δ}_{R} = 0 ;$ (3) ${F}_{t 4} sin {δ}_{R} - {F}_{f 4} sin {δ}_{R} - {F}_{μ 4} cos {δ}_{R} = 0 ;$ (4) ${F}_{μ} = \frac{G}{4} μ ;$ (5) ${F}_{f} = \frac{G}{4} f ;$ (6)

Where Fₜ represents the driving force; F*_{f}* represents a rolling resistance; and F*_{µ}* represents the lateral sliding friction force, *f* is a rolling resistance coefficient, and *µ* is the adhesion coefficient. As shown in the formulas (1) to (4), components of the driving force and the friction force in an x-axis direction for each wheel are balanced, thereby preventing the vehicle from producing forward or backward displacement during the lateral movement process and only generating lateral displacement.

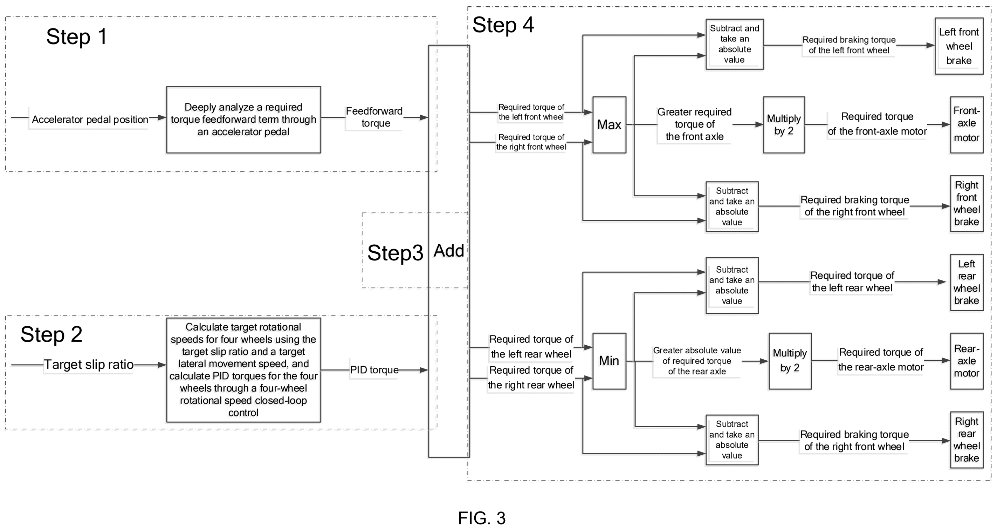

In another optional embodiment, this embodiment of the present application provides an optional drive-brake coordination control method for the vehicle lateral movement process, with the process shown in FIG. 3, including the following steps:
1. The driver (i.e., the above-mentioned target object) presses the accelerator pedal, and the front-axle motor outputs the positive torque, which is transmitted to the two front wheels through the reducer and the differential; and the rear-axle motor outputs the negative torque, which is transmitted to the two rear wheels through the reducer and the differential. During the static friction process when the wheels do not slip, as the accelerator pedal is pressed further, the torques of the front-axle motor and the rear-axle motor are gradually increased until the wheels start to slip. The motor torque at the beginning of slippage is: *T_{Ft}* ${T}_{Ft} = \frac{Gμr}{2 i}$ , where *T_{Ft}* represents the motor driving torque, and *i* represents the transmission ratio from the motor to the wheel end. Half of the motor torque minus the offset is used as the feedforward torque: ${T}_{FF} = \frac{1}{2} {T}_{Ft} - {T}_{Ofst}$ *,* where *T_{FF}* is the feedforward torque, and *T_{Ofst}* represents an offset between a slipping torque (maximum static friction force) and the feedforward torque (sliding friction force).
2. After the wheels slip and enter a dynamic friction stage, the target rotational speeds of the four wheels are calculated according to the target slip ratios and the target lateral movement speed of the four wheels. A relationship between the slip ratios and the wheel speeds is: $s = \frac{Vwheel - V vehicle}{Vwheel}$. Then, the PID closed-loop torque is obtained through rotational speed closed-loop control, with a specific calculation method shown in the following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$*,* where *e(t)* represents an error signal, that is, a difference value between the target rotational speed and the actual rotational speed; *Kₚ* represents the proportional gain coefficient, used for immediate error compensation; *Tᵢ* represents the integral time coefficient, used to eliminate static errors, and accumulate past error information to make the control more precise; and *T_{d}* represents the derivative time coefficient, used to reduce overshoot and oscillation, and predict the change in the error to adjust the control quantity in advance.
3. The sum of the feedforward torque and the PID closed-loop torque of each wheel is the required torque for each wheel, *T_{wheel} = T_{FF} + u(t)* , where *T_{wheel}* represents the required torque at the wheel end.
4. Since there is only one motor for the front wheels and the rear wheels respectively, but the required torques for the two front wheels and the two rear wheels need to be provided separately, which cannot be achieved solely by the motor output torque, this embodiment of the present application provides the drive-brake coordinated control method to solve this problem. Referring to FIG. 3, specifically, a large requirement is taken for the two front wheels, and a small requirement (the negative torque is required for the rear wheels) is taken for the two rear wheels. The braking torque is provided by the wheel brake to meet the final torque requirement of the wheel, achieving the stable lateral movement of the vehicle.

According to the descriptions of the above-mentioned implementations, those skilled in the art may clearly know that the method according to the above-mentioned embodiments may be implemented by software and a necessary general-purpose hardware platform, and certainly, may also be implemented by hardware, but the former is a preferred implementation in many cases. Based on such an understanding, the technical solutions of the present application essentially, or the part contributing to the prior art may be presented in the form of a software product. The computer software product is stored in a storage medium (e.g., a read-only memory (ROM)/random access memory (RAM), a magnetic disk, and an optical disc), and includes several instructions to cause a terminal device (e.g., a mobile phone, a computer, a server, or a network device) to perform the methods described in the embodiments of the present application.

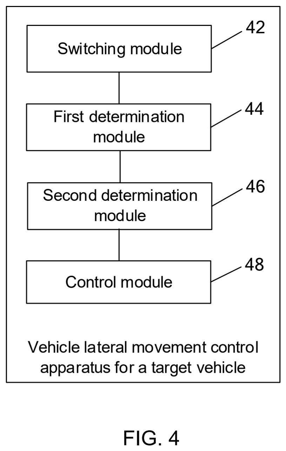

An embodiment of the present application further provides a vehicle lateral movement control apparatus for a dual-motor vehicle. As shown in FIG. 4, which is a structural block diagram of an optional vehicle lateral movement control apparatus for a dual-motor vehicle according to an embodiment of the present application, the apparatus includes:
a switching module 42, configured to switch, in a case of receiving a vehicle lateral movement request, an operating mode of a wheel steering system of the dual-motor vehicle to a target mode, where the vehicle lateral movement request is configured to instruct the dual-motor vehicle to laterally move within a target area, the dual-motor vehicle includes a front-axle motor and a rear-axle motor, and in the target mode, front wheels and rear wheels of the wheel steering system have the same rotation angle but opposite rotation directions;
a first determination module 44, configured to determine output motor torques of the dual-motor vehicle when the wheels of the dual-motor vehicle start to slip within the target area, and determine feedforward torques according to the output motor torques, where the output motor torques are an output motor torque of the front-axle motor and/or the rear-axle motor, and the feedforward torques are configured to predict required torques for the plurality of wheels of the dual-motor vehicle during the vehicle lateral movement process;
a second determination module 46, configured to determine PID closed-loop torques for the plurality of wheels respectively according to real-time rotational speeds of the plurality of wheels during the vehicle lateral movement process, where the PID closed-loop torques are configured to provide torque compensation for the plurality of wheels to control a vehicle slip ratio of the dual-motor vehicle to be a target slip ratio during the vehicle lateral movement process; and
a control module 48, configured to determine real-time required torques for the front-axle motor and the rear-axle motor during the vehicle lateral movement process according to the feedforward torque and the PID closed-loop torques, and control the front-axle motor, the rear-axle motor, and wheel brakes according to the real-time required torques to control the dual-motor vehicle to laterally move within the target area, where the wheel brakes are configured to provide braking torques to the plurality of wheels, and the braking torques are configured to adjust actual driving torques of the plurality of wheels.

Through the above-mentioned apparatus, after receiving the vehicle lateral movement request, the operating mode of the wheel steering system of the vehicle is switched to the target mode, where the vehicle lateral movement request is configured to instruct the dual-motor vehicle to laterally move within the target area, the dual-motor vehicle includes the front-axle motor and the rear-axle motor, and in the target mode, the front wheels and the rear wheels of the wheel steering system have the same rotation angle but opposite rotation directions. The output motor torques of the dual-motor vehicle are recorded when the wheels of the dual-motor vehicle start to slip within the target area, and the feedforward torques are determined according to the output motor torques, where the output motor torques are the output motor torque of the front-axle motor and/or the rear-axle motor, and the feedforward torques are configured to predict the required torques for a stable lateral movement of the plurality of wheels of the dual-motor vehicle during the vehicle lateral movement process. The real-time PID closed-loop torques for the plurality of wheels are determined respectively according to the real-time rotational speeds of the plurality of wheels during the vehicle lateral movement process, where the PID closed-loop torques are configured to provide torque compensation for the plurality of wheels, so as to control the vehicle slip ratio of the dual-motor vehicle remains stable at the target slip ratio during the vehicle lateral movement process, thereby ensuring the stable lateral movement of the vehicle. The real-time required torques for the front-axle motor and the rear-axle motor during the vehicle lateral movement process are determined according to the feedforward torque and the PID closed-loop torques, and the front-axle motor, the rear-axle motor, and the wheel brakes are controlled according to the real-time required torques to control the dual-motor vehicle to perform the stable lateral movement within the target area, where the wheel brakes are configured to provide the braking torques to the plurality of wheels, and the braking torques are configured to adjust the actual driving torques of the wheels. By adopting the above-mentioned solution, through rear-wheel steering, feedforward torques of wheel ends, and PID torques derived from wheel-speed closed-loop control, along with coordination braking control, a closed-loop rotational speed control for each wheel end is achieved, thereby achieving the stable lateral movement of the dual-motor vehicle, and facilitating convenient side-parking and vehicle exiting, and thus solving the problem in the related art that it is difficult for the vehicle to park into or exit from the parking space due to short side-parking space lengths or small safety distances left by vehicles in front and behind.

In an exemplary embodiment, the above-mentioned control module 48 is further configured to determine target required torques for the plurality of wheels respectively according to sums of the feedforward torque and the PID closed-loop torques for the plurality of wheels; and determine a maximum value among first required torques for the plurality of front wheels as a second required torque, determine, according to the second required torque, a first real-time required torque for the front-axle motor, determine a minimum value among third required torques for the plurality of rear wheels as a fourth required torque, and determine, according to the fourth required torque, a second real-time required torque for the rear-axle motor, where the plurality of wheels include the plurality of front wheels and the plurality of rear wheels, and the target required torques include the first required torques and the third required torques, with the third required torques being negative torques.

In an exemplary embodiment, the control module 48 is further configured to control the front-axle motor according to the first real-time required torque and control the rear-axle motor according to the second real-time required torque; subtract the plurality of first required torques from the second required torques respectively and take absolute values of results obtained from the subtraction to obtain first required braking torques for the plurality of front wheels, and subtract the plurality of third required torques from the fourth required torques respectively and take absolute values of results obtained from the subtraction to obtain second required braking torques for the plurality of rear wheels; and provide braking torques to the plurality of front wheels through the wheel brakes according to the plurality of first required braking torques, and provide braking torques to the plurality of rear wheels through the wheel brakes according to the plurality of second required braking torques, to control actual driving torques of the plurality of wheels to the plurality of target required torques respectively.

Further, the first determination module 44 is further configured to determine a current gravitational force G of the dual-motor vehicle, and determine the output motor torque according to the current gravitational force G and the following formula: ${T}_{Ft} = \frac{Gμr}{2 i}$, where *T_{Ft}* is the output motor torque, *µ* is an adhesion coefficient, *r* is a wheel radius, and *i* is a transmission ratio from a vehicle motor to a vehicle wheel end; and determine the feedforward torque using the following formula: ${T}_{FF} = \frac{1}{2} {T}_{Ft} - {T}_{Ofst}$, where *T_{FF}* is the feedforward torque, and *T_{Ofst}* is an offset torque between a maximum static friction force and a sliding friction force of the dual-motor vehicle.

Optionally, the second determination module 46 is further configured to calculate target rotational speeds for the plurality of wheels according to the target slip ratio; determine a rotational speed difference between the real-time rotational speeds and the target rotational speeds; and determine the PID closed-loop torques using the following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$*,* where *u(t)* is the PID closed-loop torque, *Kₚ* is a proportional gain coefficient, *e(t)* is the rotational speed difference, *Tᵢ* is an integral time coefficient, and *T_{d}* is a derivative time coefficient.

In an exemplary embodiment, the switching module 42 is further configured to send steering prompt information to a target object to prompt the target object to control the front wheels and the rear wheels to turn to target rotation angles; and in a case of determining that the front wheels and the rear wheels turn to the target rotation angles, send acceleration prompt information to the target object to prompt the target object to control an accelerator pedal, so as to control the front-axle motor to output a positive torque and the rear-axle motor to output a negative torque until the wheels of dual-motor vehicle starts to slip.

Optionally, the control module 48 is further configured to receive a target lateral movement distance sent by the target object, and in a case of determining that a lateral movement distance of the dual-motor vehicle reaches a target lateral movement distance during the vehicle lateral movement process, control the dual-motor vehicle to stop moving and control the wheel steering system to exit the target mode; or, in a case of receiving a vehicle braking request, control the dual-motor vehicle to stop moving and control the wheel steering system to exit the target mode.

An embodiment of the present application further provides a storage medium, including a stored program that, when executed, performs any one of the above-mentioned methods.

Optionally, in this embodiment, the storage medium may be configured to store program code for performing the following steps:
S1: In a case of receiving a vehicle lateral movement request, switch an operating mode of a wheel steering system of the dual-motor vehicle to a target mode, where the vehicle lateral movement request is configured to instruct the dual-motor vehicle to laterally move within a target area, the dual-motor vehicle includes a front-axle motor and a rear-axle motor, and in the target mode, front wheels and rear wheels of the wheel steering system have the same rotation angle but opposite rotation directions.
S2: Determine output motor torques of the dual-motor vehicle when the wheels of the dual-motor vehicle start to slip within the target area, and determine feedforward torques according to the output motor torques, where the output motor torques are an output motor torque of the front-axle motor and/or the rear-axle motor, and the feedforward torques are configured to predict required torques for the plurality of wheels of the dual-motor vehicle during the vehicle lateral movement process. In embodiments of the present application, the plurality of wheels of the dual-motor vehicle include at least one front wheel and at least one rear wheel.
S3: Determine PID closed-loop torques for the plurality of wheels respectively according to real-time rotational speeds of the plurality of wheels during the vehicle lateral movement process, where the PID closed-loop torques are configured to provide torque compensation for the plurality of wheels, so as to control a vehicle slip ratio of the dual-motor vehicle to be a target slip ratio during the vehicle lateral movement process.
S4: Determine real-time required torques for the front-axle motor and the rear-axle motor during the vehicle lateral movement process according to the feedforward torque and the PID closed-loop torques, and control the front-axle motor, the rear-axle motor, and wheel brakes according to the real-time required torques to control the dual-motor vehicle to laterally move within the target area, where the wheel brakes are configured to provide braking torques to the plurality of wheels, and the braking torques are configured to adjust actual driving torques of the plurality of wheels.

An embodiment of the present application further provides an electronic apparatus including a memory and a processor. The memory has a computer program stored therein. The processor is configured to run the computer program to perform the steps of any one of the above-mentioned methods.

Optionally, the electronic apparatus may further include a transmission device and an input/output device, where the transmission device is connected with the processor, and the input/output device is connected with the processor.

Optionally, in this embodiment, the processor may be configured to perform the following steps through the computer program:
S1: In a case of receiving a vehicle lateral movement request, switch an operating mode of a wheel steering system of the dual-motor vehicle to a target mode, where the vehicle lateral movement request is configured to instruct the dual-motor vehicle to laterally move within a target area, the dual-motor vehicle includes a front-axle motor and a rear-axle motor, and in the target mode, front wheels and rear wheels of the wheel steering system have the same rotation angle but opposite rotation directions.
S2: Determine output motor torques of the dual-motor vehicle when the wheels of the dual-motor vehicle start to slip within the target area, and determine feedforward torques according to the output motor torques, where the output motor torques are an output motor torque of the front-axle motor and/or the rear-axle motor, and the feedforward torques are configured to predict required torques for the plurality of wheels of the dual-motor vehicle during the vehicle lateral movement process.
S3: Determine PID closed-loop torques for the plurality of wheels respectively according to real-time rotational speeds of the plurality of wheels during the vehicle lateral movement process, where the PID closed-loop torques are configured to provide torque compensation for the plurality of wheels to control a vehicle slip ratio of the dual-motor vehicle to be a target slip ratio during the vehicle lateral movement process.
S4: Determine real-time required torques for the front-axle motor and the rear-axle motor during the vehicle lateral movement process according to the feedforward torque and the PID closed-loop torques, and control the front-axle motor, the rear-axle motor, and wheel brakes according to the real-time required torques to control the dual-motor vehicle to laterally move within the target area, where the wheel brakes are configured to provide braking torques to the plurality of wheels, and the braking torques are configured to adjust actual driving torques of the plurality of wheels.

Optionally, in this embodiment, the storage medium may include, but is not limited to, various media capable of storing program code, such as a USB flash drive, a read-only memory (ROM), a random access memory (RAM), a mobile hard disk, a magnetic disk, or an optical disk.

An embodiment of the present application further provides a computer program product, which includes a non-volatile computer-readable storage medium. The non-volatile computer-readable storage medium stores a computer program that, when executed by a processor, implements the steps of the methods described in each embodiments of the present application.

Optionally, in this embodiment, the computer program may be configured to implement the following steps when executed by the processor:
S1: In a case of receiving a vehicle lateral movement request, switch an operating mode of a wheel steering system of the dual-motor vehicle to a target mode, where the vehicle lateral movement request is configured to instruct the dual-motor vehicle to laterally move within a target area, the dual-motor vehicle includes a front-axle motor and a rear-axle motor, and in the target mode, front wheels and rear wheels of the wheel steering system have the same rotation angle but opposite rotation directions.
S2: Determine output motor torques of the dual-motor vehicle when the wheels of the dual-motor vehicle start to slip within the target area, and determine feedforward torques according to the output motor torques, where the output motor torques are an output motor torque of the front-axle motor and/or the rear-axle motor, and the feedforward torques are configured to predict required torques for the plurality of wheels of the dual-motor vehicle during the vehicle lateral movement process.
S3: Determine PID closed-loop torques for the plurality of wheels respectively according to real-time rotational speeds of the plurality of wheels during the vehicle lateral movement process, where the PID closed-loop torques are configured to provide torque compensation for the plurality of wheels to control a vehicle slip ratio of the dual-motor vehicle to be a target slip ratio during the vehicle lateral movement process.
S4: Determine real-time required torques for the front-axle motor and the rear-axle motor during the vehicle lateral movement process according to the feedforward torque and the PID closed-loop torques, and control the front-axle motor, the rear-axle motor, and wheel brakes according to the real-time required torques to control the dual-motor vehicle to laterally move within the target area, where the wheel brakes are configured to provide braking torques to the plurality of wheels, and the braking torques are configured to adjust actual driving torques of the plurality of wheels.

Optionally, for specific examples in this embodiment, reference may be made to the examples described in the above-mentioned embodiments and optional implementations, and details will not be provided in this embodiment.

Apparently, those skilled in the art should understand that the modules or the steps in the present application may be implemented through a general-purpose computing apparatus, and may be centralized on a single computing apparatus or distributed on a network formed by a plurality of computing apparatuses. Optionally, the modules or the steps may be implemented using program code executable by the computing apparatus, and then, may be stored in a storage apparatus for execution by the computing apparatus. In some cases, the steps shown or described may be performed in an order different from that presented herein, or may be implemented as separate produced integrated circuit modules, or a plurality of modules or steps among them may be implemented as a single produced integrated circuit module. Thus, the present application is not limited to any specific combination of hardware and software.

The above-mentioned contents are merely preferred embodiments of the present application and are not used to limit the present application, and the present application may be variously modified and changed for those skilled in the art. Any modification, equivalent replacement, improvement, etc. made within the principle of the present application shall fall within the protection scope of the present application.

## Claims

1. A vehicle lateral movement control method for a dual-motor vehicle, applied to the dual-motor vehicle, comprising:
switching, in a case of receiving a vehicle lateral movement request, an operating mode of a wheel steering system of the dual-motor vehicle to a target mode, wherein the vehicle lateral movement request is configured to instruct the dual-motor vehicle to laterally move within a target area, the dual-motor vehicle comprises a front-axle motor and a rear-axle motor, and in the target mode, at least one front wheel and at least one rear wheel of the wheel steering system have a same rotation angle but opposite rotation directions (S102);
determining output motor torques of the dual-motor vehicle when a plurality of wheels of the dual-motor vehicle start to slip within the target area, and determining feedforward torques according to the output motor torques, wherein the output motor torques comprise an output motor torque of the front-axle motor and/or the rear-axle motor, and the feedforward torques are configured to predict required torques for the plurality of wheels of the dual-motor vehicle during a vehicle lateral movement process (S104);
determining PID closed-loop torques for the plurality of wheels respectively according to real-time rotational speeds of the plurality of wheels during the vehicle lateral movement process, wherein the PID closed-loop torques are configured to provide torque compensation for the plurality of wheels to control a vehicle slip ratio of the dual-motor vehicle to be a target slip ratio during the vehicle lateral movement process (S106); and
determining real-time required torques for the front-axle motor and the rear-axle motor during the vehicle lateral movement process according to the feedforward torque and the PID closed-loop torques, and controlling the front-axle motor, the rear-axle motor, and a wheel brake according to the real-time required torques to control the dual-motor vehicle to laterally move within the target area, wherein a plurality of wheel brakes are configured to provide braking torques to the plurality of wheels, and the braking torques are configured to adjust actual driving torques of the plurality of wheels (S108).

2. The method according to claim 1, wherein the determining real-time required torques for the front-axle motor and the rear-axle motor during the vehicle lateral movement process according to the feedforward torque and the PID closed-loop torques comprises:
determining target required torques for the plurality of wheels respectively according to sums of the feedforward torque and the PID closed-loop torques for the plurality of wheels; and
determining a maximum value among first required torques for a plurality of front wheels as a second required torque, and determining, according to the second required torque, a first real-time required torque for the front-axle motor; determining a minimum value among third required torques for a plurality of rear wheels as a fourth required torque, and determining, according to the fourth required torque, a second real-time required torque for the rear-axle motor, wherein the plurality of wheels comprise the plurality of front wheels and the plurality of rear wheels, and the target required torques comprise the first required torques and the third required torques, the third required torques are negative torques.

3. The method according to claim 2, wherein the controlling the front-axle motor, the rear-axle motor, and a wheel brake according to the real-time required torques comprises:
controlling the front-axle motor according to the first real-time required torque and controlling the rear-axle motor according to the second real-time required torque;
subtracting the plurality of first required torques from the second required torque respectively and taking absolute values of results obtained from the subtraction to obtain first required braking torques for the plurality of front wheels, and subtracting the plurality of third required torques from the fourth required torque respectively and taking absolute values of results obtained from the subtraction to obtain second required braking torques for the plurality of rear wheels; and
providing braking torques to the plurality of front wheels through a wheel brake corresponding to the plurality of front wheels according to the plurality of first required braking torques, and providing braking torques to the plurality of rear wheels through a wheel brake corresponding to the plurality of rear wheels according to the plurality of second required braking torques, to control actual driving torques of the plurality of wheels to be the target required torques respectively.

4. The method according to claim 1, wherein the determining output motor torques of the dual-motor vehicle when a plurality of wheels of the dual-motor vehicle start to slip within the target area, and determining a feedforward torque according to the output motor torques comprises:
determining a current gravity G of the dual-motor vehicle, and determining the output motor torque according to the current gravity G and a following formula: ${T}_{Ft} = \frac{Gμr}{2 i}$, where *T_{Ft}* is the output motor torque, *µ* is an adhesion coefficient, *r* is a wheel radius, and *i* is a transmission ratio from a vehicle motor to a vehicle wheel end; and
determining the feedforward torque using a following formula: ${T}_{FF} = \frac{1}{2} {T}_{Ft} - {T}_{Ofst}$, where *T_{FF}* is the feedforward torque, and *T_{Ofst}* is an offset torque between a maximum static friction force and a sliding friction force of the dual-motor vehicle.

5. The method according to claim 1, wherein the determining PID closed-loop torques for the plurality of wheels respectively according to real-time rotational speeds of the plurality of wheels during the vehicle lateral movement process comprises:
calculating target rotational speeds for the plurality of wheels according to the target slip ratio;
determining rotational speed differences between the real-time rotational speeds and the target rotational speeds; and
determining the PID closed-loop torques using a following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$ , where *u*(*t*) is a PID closed-loop torque, *Kₚ* is a proportional gain coefficient, *e(t)* is a rotational speed difference, *Tᵢ* is an integral time coefficient, and *T_{d}* is a derivative time coefficient.

6. The method according to claim 1, wherein after the switching, in a case of receiving a vehicle lateral movement request, an operating mode of a wheel steering system of the dual-motor vehicle to a target mode, the method further comprises:
sending steering prompt information to a target object to prompt the target object to control the front wheel and the rear wheel to steer at target rotation angles; and
in a case of determining that the front wheel and the rear wheel steer at the target rotation angles, sending acceleration prompt information to the target object to prompt the target object to control an accelerator pedal, so as to control the front-axle motor to output a positive torque and the rear-axle motor to output a negative torque until the plurality of wheels of the dual-motor vehicle start to slip.

7. The method according to claim 1, further comprising:
receiving a target lateral movement distance sent by a target object, and in a case of determining that a lateral movement distance of the dual-motor vehicle reaches the target lateral movement distance during the vehicle lateral movement process, controlling the dual-motor vehicle to stop moving and controlling the wheel steering system to exit the target mode; or,
in a case of receiving a vehicle braking request, controlling the dual-motor vehicle to stop moving and controlling the wheel steering system to exit the target mode.

8. A vehicle lateral movement control apparatus for a dual-motor vehicle, comprising:
a switching module (42), configured to switch, in a case of receiving a vehicle lateral movement request, an operating mode of a wheel steering system of the dual-motor vehicle to a target mode, wherein the vehicle lateral movement request is configured to instruct the dual-motor vehicle to laterally move within a target area, the dual-motor vehicle comprises a front-axle motor and a rear-axle motor, and in the target mode, at least one front wheel and at least one rear wheel of the wheel steering system have a same rotation angle but opposite rotation directions;
a first determination module (44), configured to determine output motor torques of the dual-motor vehicle when a plurality of wheel of the dual-motor vehicle start to slip within the target area, and determine feedforward torques according to the output motor torques, wherein the output motor torques comprise an output motor torque of the front-axle motor and/or the rear-axle motor, and the feedforward torques are configured to predict required torques for the plurality of wheels of the dual-motor vehicle during a vehicle lateral movement process;
a second determination module (46), configured to determine PID closed-loop torques for the plurality of wheels respectively according to real-time rotational speeds of the plurality of wheels during the vehicle lateral movement process, wherein the PID closed-loop torques are configured to provide torque compensation for the plurality of wheels to control a vehicle slip ratio of the dual-motor vehicle to be a target slip ratio during the vehicle lateral movement process; and
a control module (48), configured to determine real-time required torques for the front-axle motor and the rear-axle motor during the vehicle lateral movement process according to the feedforward torque and the PID closed-loop torques, and control the front-axle motor, the rear-axle motor, and a wheel brake according to the real-time required torques to control the dual-motor vehicle to laterally move within the target area, wherein a plurality of wheel brakes are configured to provide braking torques to the plurality of wheels, and the braking torques are configured to adjust actual driving torques of the plurality of wheels.

9. The apparatus according to claim 8, wherein the control module (48) is configured to determine real-time required torques for the front-axle motor and the rear-axle motor during the vehicle lateral movement process according to the feedforward torque and the PID closed-loop torques by following operations:
determining target required torques for the plurality of wheels respectively according to sums of the feedforward torque and the PID closed-loop torques for the plurality of wheels; and
determining a maximum value among first required torques for a plurality of front wheels as a second required torque, and determining, according to the second required torque, a first real-time required torque for the front-axle motor; determining a minimum value among third required torques for a plurality of rear wheels as a fourth required torque, and determining, according to the fourth required torque, a second real-time required torque for the rear-axle motor, wherein the plurality of wheels comprise the plurality of front wheels and the plurality of rear wheels, and the target required torques comprise the first required torques and the third required torques, the third required torques are negative torques.

10. The apparatus according to claim 9, wherein the control module (48) is configured to control the front-axle motor, the rear-axle motor, and a wheel brake according to the real-time required torques by following operations:
controlling the front-axle motor according to the first real-time required torque and controlling the rear-axle motor according to the second real-time required torque;
subtracting the plurality of first required torques from the second required torque respectively and taking absolute values of results obtained from the subtraction to obtain first required braking torques for the plurality of front wheels, and subtracting the plurality of third required torques from the fourth required torque respectively and taking absolute values of results obtained from the subtraction to obtain second required braking torques for the plurality of rear wheels; and
providing braking torques to the plurality of front wheels through a wheel brake corresponding to the plurality of front wheels according to the plurality of first required braking torques, and providing braking torques to the plurality of rear wheels through a wheel brake corresponding to the plurality of rear wheels according to the plurality of second required braking torques, to control actual driving torques of the plurality of wheels to be the target required torques respectively.

11. The apparatus according to claim 8, wherein the first determination module (44) is configured to determine output motor torques of the dual-motor vehicle when a plurality of wheel of the dual-motor vehicle start to slip within the target area, and determine feedforward torques according to the output motor torques by following operations:
determining a current gravity G of the dual-motor vehicle, and determining the output motor torque according to the current gravity G and a following formula: ${T}_{Ft} = \frac{Gμr}{2 i} ,$, where *T_{Ft}* is the output motor torque, *µ* is an adhesion coefficient, *r* is a wheel radius, and *i* is a transmission ratio from a vehicle motor to a vehicle wheel end; and
determining the feedforward torque using a following formula: ${T}_{FF} = \frac{1}{2} {T}_{Ft} - {T}_{Ofst}$, where *T_{FF}* is the feedforward torque, and *T_{Ofst}* is an offset torque between a maximum static friction force and a sliding friction force of the dual-motor vehicle.

12. The apparatus according to claim 8, wherein the second determination module (46) is configured to determine PID closed-loop torques for the plurality of wheels respectively according to real-time rotational speeds of the plurality of wheels during the vehicle lateral movement process by following operations:
calculating target rotational speeds for the plurality of wheels according to the target slip ratio;
determining rotational speed differences between the real-time rotational speeds and the target rotational speeds; and
determining the PID closed-loop torques using a following formula: $u \left(t\right) = {K}_{p} \left[e\left(t\right)+\frac{1}{{T}_{i}}{\int }_{0}^{t} e \left(t\right) dt + {T}_{d} \frac{de \left(t\right)}{dt}\right]$ *,* where *u*(*t*) is a PID closed-loop torque, *Kₚ* is a proportional gain coefficient, *e(t)* is a rotational speed difference, *Tᵢ* is an integral time coefficient, and *T_{d}* is a derivative time coefficient.

13. The apparatus according to claim 8, after the switching, in a case of receiving a vehicle lateral movement request, an operating mode of a wheel steering system of the dual-motor vehicle to a target mode, the switching module (42) is further configured to:
send steering prompt information to a target object to prompt the target object to control the front wheel and the rear wheel to steer at target rotation angles; and
in a case of determining that the front wheel and the rear wheel steer at the target rotation angles, send acceleration prompt information to the target object to prompt the target object to control an accelerator pedal, so as to control the front-axle motor to output a positive torque and the rear-axle motor to output a negative torque until the plurality of wheels of the dual-motor vehicle start to slip.

14. A computer-readable storage medium, comprising a stored program that, when executed, performs the method according to any one of claims 1 to 7.

15. A computer program product, comprising a computer program that, when executed by a processor, performs the method according to any one of claims 1 to 7.
